(19) Europäisches Patentamt
European Patent Office
Office européen des brevets

(11) **EP 2 784 798 B1**

(12) **EUROPEAN PATENT SPECIFICATION**

(45) Date of publication and mention
of the grant of the patent:
**23.03.2016 Bulletin 2016/12**

(51) Int Cl.:
*H01J 37/244* *(2006.01)*   *H01J 37/28* *(2006.01)*

(21) Application number: **13001598.5**

(22) Date of filing: **27.03.2013**

(54) **Determining an electromagnetic response of a sample**

Bestimmung einer elektromagnetischen Reaktion einer Probe

Détermination d'une réponse électromagnétique d'un échantillon

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.10.2014 Bulletin 2014/40**

(73) Proprietor: **Max-Planck-Gesellschaft zur Förderung der Wissenschaften e.V.
80539 München (DE)**

(72) Inventors:
• **Talebi Sarvari, Nahid
70195 Stuttgart (DE)**
• **Vogelgesang, Ralf
70563 Stuttgart (DE)**
• **Van Aken, Peter
70435 Stuttgart (DE)**

(74) Representative: **Hertz, Oliver
v. Bezold & Partner
Patentanwälte - PartG mbB
Akademiestrasse 7
80799 München (DE)**

(56) References cited:
• **A. YURTSEVER ET AL: "Subparticle Ultrafast Spectrum Imaging in 4D Electron Microscopy", SCIENCE, vol. 335, no. 6064, 6 January 2012 (2012-01-06), pages 59-64, XP055071802, ISSN: 0036-8075, DOI: 10.1126/science.1213504**

• **SANG TAE PARK ET AL: "Photon-induced near-field electron microscopy (PINEM): theoretical and experimental;Photon-induced near-field electron microscopy (PINEM): theoretical and experimental", NEW JOURNAL OF PHYSICS, INSTITUTE OF PHYSICS PUBLISHING, BRISTOL, GB, vol. 12, no. 12, 17 December 2010 (2010-12-17), page 123028, XP020201789, ISSN: 1367-2630, DOI: 10.1088/1367-2630/12/12/123028**

• **GARCÃA DE ABAJO F J ET AL: "Electron energy-gain spectroscopy", NEW JOURNAL OF PHYSICS, INSTITUTE OF PHYSICS PUBLISHING, BRISTOL, GB, vol. 10, no. 7, 1 July 2008 (2008-07-01), page 73035, XP020137900, ISSN: 1367-2630**

• **JUN ZHOU ET AL: "Numerical analysis of electron-induced surface plasmon excitation using the FDTD method;Numerical analysis of electron-induced surface plasmon excitation using the FDTD method", JOURNAL OF OPTICS, INSTITUTE OF PHYSICS PUBLISHING, BRISTOL GB, vol. 13, no. 3, 20 January 2011 (2011-01-20), page 35003, XP020192282, ISSN: 2040-8986, DOI: 10.1088/2040-8978/13/3/035003**

• **CHRISTIAN MATYSSEK ET AL: "Computing electron energy loss spectra with the Discontinuous Galerkin Time-Domain method", PHOTONICS AND NANOSTRUCTURES, ELSEVIER, AMSTERDAM, NL, vol. 9, no. 4, 4 April 2011 (2011-04-04), pages 367-373, XP028298199, ISSN: 1569-4410, DOI: 10.1016/J.PHOTONICS.2011.04.003 [retrieved on 2011-04-14]**

EP 2 784 798 B1

## Description

Field of the invention

The present invention relates to a method of determining an electromagnetic response of a dispersive and anisotropic sample structure. Furthermore, the present invention relates to a method for investigating a dispersive and anisotropic sample structure having a predetermined bulk permittivity and permeability. Applications of the invention are available in the field of electron microscopy.

Background of the invention

In the present specification, reference is made to the following publications illustrating conventional techniques.

[1] Park, S.T., M.M. Lin, and A.H. Zewail, Photon-induced near-field electron microscopy (PINEM): theoretical and experimental. New Journal of Physics, 2010. 12.
[2] Zewail, A.H. and V. Lobastov, Method and system for ultrafast photoelectron microscope, W.I.P. Organization, Editor 2005: USA.
[3] de Abajo, F.J.G. and A. Howie, Retarded field calculation of electron energy loss in inhomogeneous dielectrics. Physical Review B, 2002. 65(11).
[4] Koh, A.L., et al., Electron Energy-Loss Spectroscopy (EELS) of Surface Plasmons in Single Silver Nanoparticles and Dimers: Influence of Beam Damage and Mapping of Dark Modes. Acs Nano, 2009. 3(10): p. 3015-3022.
[5] Geuquet, N. and L. Henrard, EELS and optical response of a noble metal nanoparticle in the frame of a discrete dipole approximation. Ultramicroscopy, 2010. 110(8): p. 1075-1080.
[6] Matyssek, C., et al., Computing electron energy loss spectra with the Discontinuous Galerkin Time-Domain method. Photonics and Nanostructures-Fundamentals and Applications, 2011. 9(4): p. 367-373.
[7] Howie, A., Photon interactions for electron microscopy applications. European Physical Journal-Applied Physics, 2011. 54(3).
[8] Egerton, R.F., Limits to the spatial, energy and momentum resolution of electron energy-loss spectroscopy. Ultramicroscopy, 2007. 107(8): p. 575-586.
[9] de Abajo, F.J.G., Optical excitations in electron microscopy. Reviews of Modern Physics, 2010. 82(1): p. 209-275.
[10] Verboncoeur, J.P., Particle simulation of plasmas: review and advances. Plasma Physics and Controlled Fusion, 2005. 47: p. A231-A260.
[11] Barwick, B., D.J. Flannigan, and A.H. Zewail, Photon-induced near-field electron microscopy. Nature, 2009. 462(7275): p. 902-906.
[12] de Abajo, F.J.G. and M. Kociak, Electron energy-gain spectroscopy. New Journal of Physics, 2008. 10.
[13] Aizpurua, J., A. Rivacoba, and S.P. Apell, Electron-energy losses in hemispherical targets. Physical Review B, 1996. 54(4): p. 2901-2909.
[14] de Abajo, F.J.G. and J. Aizpurua, Numerical simulation of electron energy loss near inhomogeneous dielectrics. Physical Review B, 1997. 56(24): p. 15873-15884.
[15] Park, S.T., O.-H. Kwon, and A.H. Zewail, Chirped imaging pulses in four-dimensional electron microscopy: femtosecond pulsed hole burning. New Journal of Physics, 2012. 14.
[16] Taflove, A., Computational Electrodynamics: The Finite-Difference Time-Domain Method. 1995: Norwood, MA: Artech House.
[17] Etchegoin, P.G., E.C. Le Ru, and M. Meyer, An analytic model for the optical properties of gold. Journal of Chemical Physics, 2006. 125(16).
[18] Schneider, J., B., Understanding the Finite-Difference Time-Domain Method. 2010: www.eecs.wsu.edu/~schneidj/ufdtd.
[19] US 2011/0220792 A1.

The use of electron sources in the generally known transmission electron microscope has resulted in the exploration of the static properties of samples with sub-nanometer resolution. Considering the inelastic diffractions of the electrons with the electromagnetic modes of the samples, there has been another advantage to investigate the photonic systems by measuring the energy losses suffered by fast electrons. With the main concept of electron-energy-loss spectroscopy, electrons interact with their own evanescent scattered field, suffering changes in momentum and energy in accordance with the respective conservation laws.

Interest in microscopy of the dynamics of the electromagnetic modes in optical systems with high spatial and temporal resolution has ushered in sophisticated methods like electron-energy-loss/gain spectroscopy (EELS/EEGS) and "Photon-induced near-field electron microscopy (PINEM)" [1], [20]. In EELS, which is broadly used, e. g. for investigating nano-particle samples, an incident high-energy electron leads to a temporal polarization of the sample which in turn influences the incident electron resulting inelastic scattering of the electron.

In PINEM, oscillatory sample polarization is additionally induced by an external optical field resulting in energy gain and loss events with an energy transfer to an incident electron by multiples of the photon energy.

Imaging of samples and their physical or chemical interactions with high temporal and spatial resolution has been achieved by a pump-probe approach, using electron-photon inelastic scattering of pulsed electron sources and subpicosecond pulsed optical beams [2]. The conjunction of the pulsed optical sources and the wide-band electron sources in the context of the PINEM technique can thus be used for time-resolved spectro-/microscopies, with the optical pulse acting as a temporal gate and the electrons carry spectral information about the dynamics of the system under test in the time-energy phase space. Due to the relatively narrow spectral width of the optical beams (8 meV for an optical pulse of 500 fs duration) the energy resolution of the electron energy loss spectroscopy can be improved also at low energy losses, while there is a competition between temporal and energy resolution, limited by the Fourier-transform related temporal and energy broadening of the optical pulse.

In order to gain insight into to the real process and calculate the optimum parameters for obtaining best signals from the electron or photon detectors, numerical simulations are often carried out. The numerical methods presented so far to compute the EELS or EEGS data suffer from the following main problems:

Firstly, with conventional frequency domain methods like Boundary element methods [3], finite element methods [4], and discrete dipole approximations [5], electron pulses cannot be modeled. Neither can pulsed radiation be considered. Insertion of substrates and electrically large structures is also a problem for methods like discrete dipole approximation.

Furthermore, with conventional time-domain methods such as discontinues Galerkin method, electrons have only been assumed as singular electromagnetic sources, using the Huygens principle within the total-field scattered-field boundary limitation [6]. The aforementioned technique precludes the electrons from moving through materials boundaries, and it also overestimates the spatial resolving power of the electron sources by treating the moving electrons as singular Coulomb charges.

Furthermore, the interaction of fast electrons with intense laser radiation in the presence of a material has been simulated within a semi-classical approach [1, 7], considering the electromagnetic vector potential of the system composed of a laser and a particle as the interaction Hamiltonian. However, the field due to the electrons themselves had to be neglected. That's because the previous calculations present in the literature has treated the electrons only as probes of the electromagnetic modes of the samples, while a high intensity optical excitation was used as a pump for exciting the mentioned modes. Within such a procedure, the relatively weaker response of the matter to the electron impact has been neglected. However, the latter response is the basis of powerful methods like EELS, at which, only the electron sources are available.

Another practical problem of the conventional EELS/EEGS and PINEM techniques is related to the complex dependencies of sample responses on input parameters of the electron pulse and electromagnetic excitations (excitation parameters). Depending on the input parameters, the interpretability or significance of the measured signals can be strongly limited, or the selection of optimized input parameters resulting in measured signals having a sufficient significance can be time consuming.

Objective of the invention

The objective of the invention is to provide an improved method of determining an electromagnetic response of a dispersive and anisotropic sample structure being capable of avoiding limitations and disadvantages of conventional techniques. In particular, the objective of the invention is to provide an improved method being capable of presenting the electromagnetic response of the sample with increased reliability and/or interpretability. Furthermore, the objective of the invention is to provide an improved method of investigating a dispersive and anisot-ropic sample structure, being capable of avoiding limitations and disadvantages of conventional techniques and in particular allowing measurements with increased efficiency.

Summary of the invention

The above objectives are solved by methods comprising the features of the claims 1 and 10. Advantageous embodiments of the invention are defined in the dependent claims.

According to a first aspect of the invention, the above objective is solved by the general technical teaching of providing a method of determining an electromagnetic response of a dispersive and anisotropic sample structure having a predetermined bulk permittivity and permeability, to electron and radiation pulses, wherein an electron pulse response of the sample structure to an electron pulse excitation and a radiation response of the sample structure to an electromagnetic radiation excitation are superimposed for providing the electromagnetic response of the sample structure to be obtained. The electromagnetic response is a physical feature which generally comprises an energy-loss probability, in particular at least one of electron-energy-loss spectra of the sample structure and an experienced phase of electron wave functions after interacting with photons of the electromagnetic radiation excitation.

The electron pulse response of the sample structure is calculated using a finite-difference time-domain method (FDTD method), wherein the electron pulse excitation is represented by a non-singular current source driven by relativistic moving non-Coulombian electron charges. The electron pulse response depends on the bulk permittivity and permeability of the sample structure, and it is calculated on the basis of an interaction of the electron pulse excitation with electromagnetic, e. g. optical, modes of the sample structure. The radiation response also depends on the bulk permittivity and permeability of the sample structure, and it is calculated using a finite-difference time-domain method as well. The electron pulse response and the radiation response are calculated separately from each other before superimposing the responses. By this technique, the calculation is facilitated and accelerated, and the operation of a measuring apparatus implementing the invention is improved.

According to the invention, a time-domain method for calculating the electron-energy-loss (EEL) or gain (EEG) spectra and/or phase-shift spectra of fast electrons in interaction with a sample structure and/or a laser field is proposed, wherein the electrons are treated as relativistic moving charges or charge distributions (charge clouds). The inventive method is comprised of two simulation steps for calculating the response of the structure with the incident electron source, and the responses of the structure with the incident laser fields, in addition to a step of linearly superimposing the previously mentioned responses to calculate e. g. the total EELS/EEGS spectra with respect to predetermined input parameters, e. g. an arbitrary settled intensity and delay.

Advantageously, the present invention provides a tool for systematic investigation of the effects of electromagnetic pulse shape parameters and the electron's trajectory on energy loss/gain spectra resulted by the electromagnetic sample structure definable by bulk permittivity and permeability. The main parameters of the laser source preferably considered are the polarization ($\vec{P}$) of the electromagnetic excitation, the temporal delay in comparison with the electron pulse excitation ($\tau$), peak laser intensity ($I_p$), spatial focus size (W), carrier frequency ($f_c$), pulse temporal profile, angle of the incidence ($\theta$), and pulse duration ($W_s$). The important parameters of the electron pulse excitation are, for single electron sources, the velocity (V) and impact parameter (b), while for pulsed electrons the number of the electrons ($N_e$), the duration ($W_e$), the impact parameter (b), and the mean position of the electrons ($\bar{Z}$) at the electron frame is considered as the input.

The inventors have found that the electron-energy loss/gain or PINEM response of an arbitrary sample structure definable by bulk permittivity and permeabilities can be provided by the superposition technique. In particular, only the above two separate, full simulation steps are needed to be carried out for given trajectory of moving electrons: one simulation for the incident laser field and another one for the incident electrons. Within the context of the nonrecoil approximation, the energy-loss spectrum for every intensity and delay of the incident electromagnetic excitation, e. g. laser field in comparison with the electron sources can subsequently be computed using just the results obtained by the aforementioned simulations. The invention also provides a method to calculate the experienced phase of the electrons by moving through or adjacent to the sample structure, as a function of the intensity and delay of the incident laser field.

In contrast to frequency domain numerical methods [3-5] conventionally used, the present invention, which is based on a finite-difference time-domain algorithm, can include pulsed electrons and electromagnetic sources. Moreover, unlike previously reported attempts to compute the energy-loss spectra in time domain [6], here the electrons are necessarily non-singular moving charges. Treating the electrons as singular Colombian sources can result in overestimation of the achievable spatial resolutions in electron energy-loss images of transmission electron microscopes operating in the low-loss regimes. Advantageously, here a certain broadening is accounted for the electron sources. More importantly, moving electrons can also pass through the sample structure. All the aforementioned conventional approaches compute the energy-loss/gain spectra in a classical approach (Maxwell equations plus Lorentz force to compute the energy-loss of the electrons) which results in a linear relation between the electron-loss probability spectrum and the electric field, as well a dependent on the phase of the electric field. Here, the semi-classical approach is incorporated [1, 7].

The major advantage of the present invention over the reported results of theoretical PINEM [1, 7] is the consideration of scattered field caused by both the electron and electromagnetic sources, which allows investigating the temporal dynamics of EEL/EEG spectra with respect to the intensity of the incident electromagnetic excitation, e. g. laser field. Of practical importance is the computation of the intensities of the incident electromagnetic excitation field needed to overcome the scattered field due to the electrons. Furthermore, the investigation of the transition from energy loss spectra probed in the absence of any external radiation fields to the energy loss and gain dynamics in the presence of the laser field and arbitrary structures is made possible by the combination of the presented invention and any finite-difference frequency-domain software commercially available.

According to a preferred embodiment of the invention, the electron pulse excitation is represented by a charge cloud, e. g. a Gaussian charge distribution, which is treated as a current density function derived from a Gaussian electron wavefunction. Alternatively, the charge cloud can be characterized by a linear or quadratic projection. The aforementioned charge clouds can be used to consider wavefunctions for the electrons other than Gaussian, such as rectangular wavefunction, if experimentally achievable.

Advantageously, the electron and radiation excitations can be provided with multiple characteristics. As an example, the electromagnetic radiation excitation is not restricted to a certain wavelength range, but rather selected from one of terahertz, microwave, optical, Ultraviolet, and X-rays radiation. Furthermore, according to preferred embodiments of the invention, the electron pulse and/or radiation excitation can have a continuous-wave shape or a pulsed shape.

According to a preferred application of the invention, the inventive method includes a step of simulating photon induced near-field electron microscopy (PINEM) spectra of the sample structure by superimposing the electron pulse response and radiation responses provided with the simulation steps. Preferably, the inventive method includes a step of simulating electron-energy-loss spectra or the photon induced/assisted near-field electron microscopy spectra at intensities of the electromagnetic radiation excitation at which both of the electron pulse excitation and the electromagnetic radiation excitation have equal or comparable contributions to the electromagnetic response.

According to a particularly preferred embodiment of the invention, particular excitation parameters of the electron pulse excitation and the electromagnetic radiation excitation are selected in dependency on the calculated electromagnetic response of the sample structure. The excitation parameters are selected such that the calculated electromagnetic response is optimized in terms of the information content to be obtained. In other words, with the use of the selected excitation parameters, the electromagnetic response is characterized by a predetermined significance. The term "significance of the calculated electromagnetic response" refers to the interpretability of the calculated electromagnetic response. Depending on the task of applying the inventive method, the electromagnetic response is considered to be significant if it includes the information content to be obtained. With the embodiment of selecting excitation parameters, the adjustment of optimized input parameters of a practical measurement is essentially facilitated. A time consuming search for optimized input parameters during the measurement can be avoided.

Preferably, the predetermined significance of the calculated electromagnetic response is obtained, when the calculated electromagnetic response has a maximum spatial, temporal and/or energy resolution. With this embodiment, the inventive method provides optimized spectra. As an alternative, the calculated electromagnetic response is considered to be significant if it shows an interference pattern. As a further alternative, the excitation parameters can be optimized so that the calculated electromagnetic response enables a decomposition of certain modes of the sample structure. Examples of such modes are cases of radiation-free modes, like so called "toroidal modes".

The selected excitation parameters can be iteratively obtained by evaluating the calculated electromagnetic response of the sample structure and varying at least one of the electron pulse excitation parameters and the electromagnetic radiation excitation parameters. The calculation of the electromagnetic response of the sample structure is repeated with changed parameters, until the predetermined significance of the calculated electromagnetic response is obtained.

According to a second aspect of the invention, the above objective is solved by the general technical teaching of providing a method of investigating a dispersive, nonlinear, and anisotropic sample structure having a predetermined bulk permittivity and permeability, wherein a calculated electromagnetic response of the sample structure is determined with a method according to the above first aspect of the invention. Furthermore, the excitation parameters of the electron pulse excitation and the electromagnetic radiation excitation are selected, such that the predetermined significance of the calculated electromagnetic response is obtained. Finally, a real electromagnetic response of the sample structure is measured using the selected excitation parameters.

Furthermore, a measuring apparatus is described, which is configured for measuring an electromagnetic response of a dispersive, nonlinear, and anisotropic sample structure. The measuring apparatus comprises an excitation device for subjecting the sample structure to an electron pulse excitation and an electromagnetic radiation excitation, an adjustment device for adjusting the excitation device so that it is operated with se-lected excitation parameters obtained with a method according to the above first aspect of the invention, and a sensor device for measuring a real electromagnetic response of the sample structure. Accordingly, it is possible to experimentally investigate the mutual coherency of the incident electron and photon pulses.

A further subject of the invention is a computer-readable medium comprising a computer program with a program code for carrying out the method according to the invention, when the program is running on a computer.

Brief description of the drawings

Further details and advantages of the invention are described in the following with reference to the attached drawings, which show in:

Figure 1: a flowchart of a method determining an electro-magnetic response of a sample structure according to the invention;

Figure 2: schematic illustrations of single and spatially distributed pulsed electron sources;

Figure 3: a flowchart of calculating an electron pulse response of the sample structure;

Figure 4: a flowchart of calculating a radiation response of the sample structure;

Figure 5: a flowchart of calculating the electromagnetic response of the sample structure by superimposing the electron pulse response of Figure 3 and the radiation response of Figure 4;

Figure 6: a flowchart of a method of investigating a sample structure according to the invention; and

Figure 7: a schematic illustration of a measuring apparatus for investigating a sample structure by a method according to the invention.

<u>Description of preferred embodiments</u>

Features of preferred embodiments of the invention are described here with particular reference to the mathematical background of the inventive methods. The practical implementation of the inventive methods can be obtained with commercial software, like e. g. Agilent EEsof EDA's electromagnetic Professional, Lumerical FDTD solutions, or OptiFDTD, running on computing circuits. Details of the measuring apparatus and the operation thereof are not described as far as they are known from prior art techniques, e. g. from conventional electron microscopes.

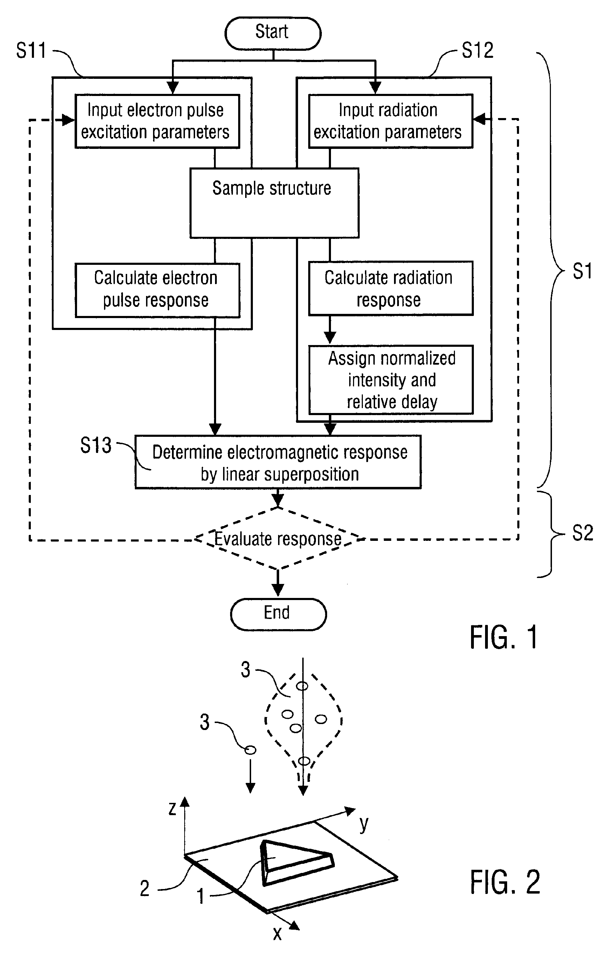

Figure 1 schematically illustrates a method (S1) of determining an electromagnetic response of a sample structure 1 according to the invention. The method S1 includes two calculations S11 and S12 for calculating responses of the sample structure 1 to electron and radiation excitations, resp.. With calculation S11, electron pulse excitation parameters (S111) and sample structure features (S112), including geometric features, permittivity and permeability of the sample structure, are input. Subsequently, the electron pulse response is calculated (S113). Calculation S11 includes the input of the radiation excitation parameters (S121) and the sample structure features (S113) and the calculation of the radiation response of the sample structure (S123). Additionally, a normalization is introduced (S124), including an assignment of a normalized radiation intensity and delay relative to the electron pulse excitation. Finally, the electromagnetic response of the sample structure is determined by a linear superposition of the electron pulse response and the radiation response.

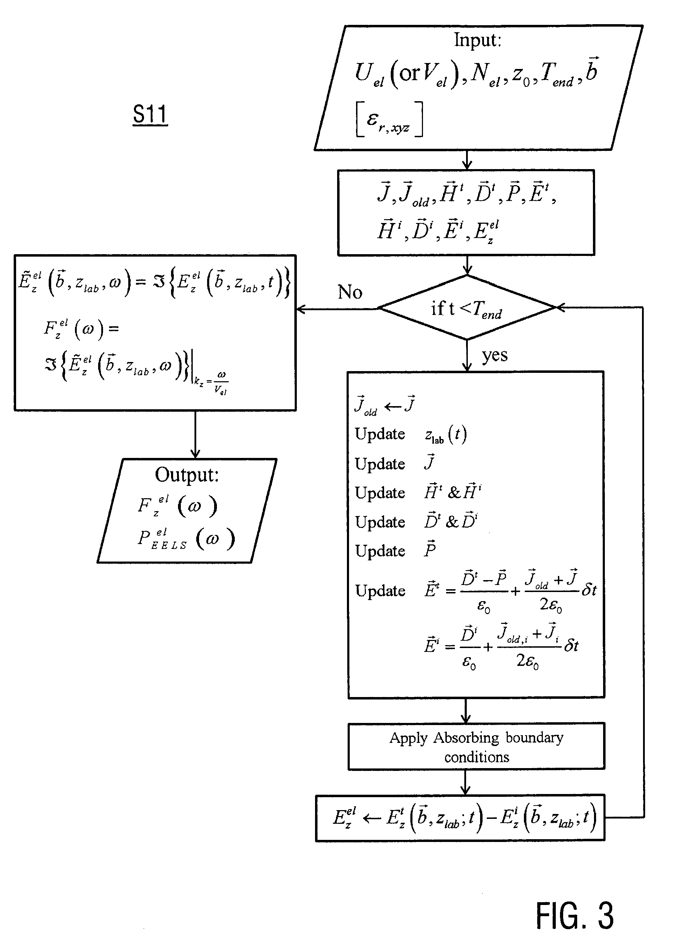

Furthermore, Figure 1 schematically illustrates an optional feature of evaluating the calculated electromagnetic response and changing input parameters for obtaining optimized input parameters (S2). Details of the methods (S1) and (S2) are described below with reference to Figures 3 to 6.

Figure 2 shows an example of a sample structure 1 which has been practically investigated with the methods of the invention. The sample structure 1 comprises e. g. a metallic nanoprism positioned upon a substrate 2. The nanoprism is a triangular gold or silver nanoprism with edge length of e. g. 400 nm and a height of 40 nm, on top of a $Si_3N_4$ substrate of 30 nm thickness. The sample structure 1 has been experimentally analyzed using energy-filtered transmission electron microscopy (EFTEM) in a Zeiss SESAM microscope. Furthermore, Figure 2 shows that single or spatially distributed pulsed electron sources 3 can be introduced to compute the EEL spectra. As an example, the electron sources 3 have an energy of about 200 keV. In order to compute the EELS spectra using the FDTD method, a relativistic electron source 3 has been implemented. All the simulations are carried out at the laboratory frame. Instead of modeling the electron source as a singularity, a cloud of charge distribution density can be considered. The spatial extent of this cloud is estimated by the Coulomb delocalization. The optical source (not shown) is implemented as an oscillating plane comprised of Huygens point sources in the far-field (e. g., 1.5 mm above the sample structure 1).

<u>S11) Electron pulse response</u>

The electronic current introduced here is composed of relativistic electrons moving either inside or adjacent to a material sample structure, at a considered impact factor. Instead of considering the electrons as singular Colombian charges, an adjustable spatial broadening of in lateral spatial coordinates as well as in the direction of propagation is considered, in agreement with the practical spatial resolution of transmission electron microscopes in any kind of inelastic scattering, in low-loss regimes [8]. Moreover, instead of using the total-field scattered-field approach [6], a direct inclusion of the currents is introduced which allows to consider also electron trajectories inside the sample structure.

The charge density assigned to the electron source in the rest frame of the electron is given by $\rho=q\delta(x-x_0,\ y-$

$y_0$, z-$z_0$) in which ($x_0,y_{0,}z_0$) is the position of the electron; q is the electron charge, and $\delta(\cdot)$ is the Dirac delta function. In the laboratory reference frame, within the framework of the nonrecoil approximation [9], the charge-density distribution function for an electron moving along the z-axis with the velocity $V_{el}$ will be given by

$$\rho' = \gamma q\, \delta\left(x - x_0, y - y_0, \gamma\left(V_{el}t' + z'\right) - z_0\right) \tag{1}$$

in which (z',t') are the spatial and temporal coordinate parameters in the laboratory frame, and $\gamma = \dfrac{1}{\sqrt{1-\left(V_{el}/c\right)^2}}$ is the Lorentz factor. Note that (x',y')=(x,y). According to Ampere's law, the current source associated with the moving charge distribution function is given by:

$$J_z = \gamma q V_{el} \delta\left(x' - x_0, y' - y_0, \gamma\left(V_{el}t' + z'\right) - z_0\right)$$

$$= \lim_{W_{xy}\to\infty} \lim_{W_z\to\infty} q V_{el} \frac{\gamma}{\left(\sqrt{2\pi}\,W_{xy}\right)^2 \left(\sqrt{2\pi}\,W_z\right)} e^{-\left(\frac{1}{2}\frac{(x'-x_0)^2+(y'-y_0)^2}{W_{xy}^2}\right)} e^{-\frac{1}{2}\left(\frac{(z'-z_{lab}(t))^2}{(W_z/\gamma)^2}\right)} \tag{2}$$

in which $z_{lab}\left(t'\right) = \dfrac{z_0}{\gamma} - V_{el}t'$ . It follows from equation (2) that the delta function can be approximated by the limit of the Gaussian function. $\vec{b} = (x_0, y_0)$ is the electron impact parameter. The scheme proposed here for charge broadening might be different or similar to those used in particle simulations of plasmas [10]. In principle several schemes can be used for charge broadening, as mentioned at reference [10] and references within. Different methods for such a charge broadening can be considered as nearest grid points, linear, quadratic and so on, and all has been concluded in step S11 (see Figures 1, 3). However, the Gaussian function introduced in equation (2) is preferable and allow a direct comparison of the classical electron source with the current density functions obtained from the Schrödinger equation. In order to show that, firstly an initial Gaussian wave-function for the electron source at the laboratory frame is considered as:

$$\psi\left(\vec{r}',t'\right) = \left[\frac{1}{(2\pi)^{\frac{3}{2}} W_{xy}^2 W_z'} e^{-\frac{1}{2}\left(\frac{(x'-x_0)^2+(x-y_0)^2}{W_{xy}^2}\right)} e^{-\frac{1}{2}\left(\frac{z'-z_0(t)}{W_z'}\right)^2}\right]^{\frac{1}{2}} e^{-i\left(\omega_{el}t'-k_{el}z'\right)} \tag{3}$$

at which $W_{xy}$ is the spatial transverse broadening of the electron source which can be approximated by 8 nm, which is the spatial resolution of the transmission electron microscopes. $W_z'$ is the broadening of the optical pulse along the z-

axis. $\vec{b} = (x_0, y_0)$ is the electron impact parameter and $z_0(t)$ is the time dependent position of the electron source. $\omega_{el}$ and $k_{el}$ are the electron angular and spatial frequencies. Using the continuity equation

( $\vec{J}_{el}\left(\vec{r},t\right) = \dfrac{q\hbar}{2m_0 i}\left(\psi^*\left(\vec{r},t\right)\nabla\psi\left(\vec{r},t\right) - \psi\left(\vec{r},t\right)\nabla\psi^*\left(\vec{r},t\right)\right)$ ) one can obtain for the current density function as:

$$J_z\left(\vec{r}',t'\right) = \frac{q\hbar k}{m_0} \frac{1}{\left(\sqrt{2\pi}\, W_{xy}\right)^2 \left(\sqrt{2\pi}\, W_z'\right)} e^{-\left(\frac{1}{2}\frac{\left(x'-x_0\right)^2+\left(y'-y_0\right)^2}{W_{xy}^2}\right)} e^{-\frac{1}{2}\left(\frac{\left(z'-z_0(t')\right)^2}{\left(W_z'\right)^2}\right)} \tag{4}$$

Since $\dfrac{\hbar k}{m_0} = V_{el}$ at which $m_0$ is the electron mass, by comparing (2) and (4) one can define a relativistic correction for the wavefunction by setting $z_0\left(t'\right) = z_{lab}(t') = \dfrac{z_0}{\gamma} - V_{el}t'$ and $W_z' = W_z/\gamma$ .

Interaction of swift electrons with the electromagnetic modes of the sample structure and computation of the energy-loss suffered by the electrons has been discussed in several publications. These reports may be classified into quantum mechanical [1, 7, 11, 12] and classical electrodynamics treatments [13, 14]. While the combination of Maxwell and Lorentz force equations can be used to compute the total energy loss suffered by the moving electrons at classical electrodynamics, definition of the energy-loss probability in the context of classical electrodynamics is not straightforward. An attempt to define the energy-loss spectrum in this direction has led to a linear relation between the energy-loss probability and the temporal and spatial Fourier-transformed electric field [9], which is a complex value.

Another type of theoretical treatment of the energy-loss probabilities the quantum mechanical approach within the context of either semi-classical [1, 7, 15] or quantum scattering theory [12]. Both of these results show a relation between the energy-loss probability and the intensity of the electric field, which is certainly a positive value [12]. In the semi-classical treatment the interaction Hamiltonian is related to the electromagnetic vector potential, which can be computed using Maxwell's equations. A full and concise approach to compute the PINEM results has been provided in [1]. The probability of the electron to lose or gain energy from n photon quanta is given by [1, 7]:

$$P_n\left(\omega,\tau\right) = \int_{-\infty}^{+\infty} dz \left| g^i\left(z\right) J_n\left(\frac{q}{\hbar\omega}\left|F_z\left(\omega\right)\right| \exp\left[-\frac{\left(z/V_{el}+\tau\right)^2}{4W_s^2}\right]\right)\right|^2 \tag{5}$$

where q is the electron charge and $\hbar$ is Planck's constant, $W_s$ is the temporal broadening of the optical Gaussian pulse, and $\tau$ is the time delay between the electron and optical pulse. $F_z$ is the PINEM field described as [1, 12]:

$$F_z\left(\omega\right) = \int_{-\infty}^{+\infty} dz\, \Im\left\{E_z\right\}\left(\omega;x_e,y_e,z\right)e^{-i\frac{\omega}{V}z}$$

$$= \Im\left\{\Im\left\{E_z\right\}\right\}\left(\omega;x_e,y_e;k_z = \frac{\omega}{V}\right) \tag{6}$$

where V is the velocity of the electrons and $\Im\left\{E_z\right\}$ is the temporal Fourier transform of the electric field, defined as

$\Im\left\{E_z\right\} = \int_{-\infty}^{+\infty} dt\, E_z\left(t;x_e,y_e,z\right)e^{i\omega t}$ . Correspondingly, $\Im\left\{\Im\left\{E_z\right\}\right\}$ is the double Fourier transform of the electric field, which corresponds to the fields in $(\omega,k_z)$ space. $g^i(z)$ is the envelope of the initial wavefunction of the electron at the electron (rest) frame. It follows from equation (3) that it can be given by

$$g^{i}(z) = \int_{x=-\infty}^{+\infty} \int_{y=-\infty}^{+\infty} dxdy \left[ \frac{1}{(2\pi)^{\frac{3}{2}} W_{xy}^2 W_z'} e^{-\frac{1}{2}\left(\frac{(x-x_0)^2+(x-y_0)^2}{W_{xy}^2}\right)} e^{-\frac{1}{2}\left(\frac{z-z_0}{W_z'}\right)^2} \right]^{\frac{1}{2}} =$$

$$\left[ \frac{1}{\sqrt{2\pi}W_z'} e^{-\frac{1}{2}\left(\frac{z-z_0}{W_z'}\right)^2} \right]^{\frac{1}{2}}$$

$$(7)$$

wherein the integration is applied at the time domain.

In Reference [1] the whole attention was devoted to the intensities of the laser field which are well above the scattered field caused by the electrons, so that the latter is negligible. In other words, the role of the electron pulses was restricted to probing the scattered field of the structures induced by the photon pumps, and the electron self-field has not been considered.

On the contrary, by incorporating electron sources of equation (2) or (4) into the finite-difference time-domain method according to the invention, the scattered electromagnetic radiation can be computed from the structures caused by the pulsed electrons. To avoid the interaction of the electrons with its own incident field, only the scattered field of the electrons is computed as the output of step S11 (see Figures 1, 3). The input of step S11 is the velocity or energy of the electron source, the impact parameter(s), the initial position(s) of the electron(s) at the electron frame, and the total number of the electrons as well as the spatial broadening of each individual electron source.

On the basis of the above equations, Figure 3 shows details of simulation S11 of Figure 1. As the electron pulse response, the Fourier component of the electric field scattered by the sample structure 1 is computed. The scattered electric field is caused by the electron source 3 described by above equation (2). The symbols used in this flowchart are $U_{el}$ :

electron energy; $V_{el}$ : electron velocity; $N_{el}$ : number of the incident electrons; $z_0$ : projected initial position of the electron at z-axis, at the electron frame; $T_{end}$ : final simulation time; $\vec{J}$ : current density vectors; $\vec{J}_{old}$ : current density vector at $t-\delta t$ ; $z_{lab}(t)$ : projected time-dependent position of the electron at the z-axis, at the lab frame; $\vec{H}^\alpha$ :

magnetic field vector $\vec{H}^\alpha = (H_x^\alpha, H_y^\alpha, H_z^\alpha)$ , $\alpha \equiv i$ denotes the incident and $\alpha \equiv i$ denotes the total magnetic field; $\vec{D}^\alpha$ : displacement vector $\vec{D}^\alpha = (D_x^\alpha, D_y^\alpha, D_z^\alpha)$ , $\alpha \equiv i$ denotes the incident and $\alpha \equiv t$ denotes the total displacement field; $\vec{P}$ : polarization density vector $\vec{P} = (P_x, P_y, P_z)$ ; $\vec{E}^\alpha$ : electric field vector

$\vec{E}^\alpha = (E_x^\alpha, E_y^\alpha, E_z^\alpha)$ , $\alpha \equiv i$ denotes the incident and $\alpha \equiv t$ denotes the total electric field; $E_z^{el}(z,t)$ : electric field along the trajectory of the electrons at time t caused by the electron source; $\Im\{\square\}$: Fourier transform; $[\varepsilon_{r,xyz}]$ : anisotropic permittivity function as a function of angular frequency; and $\vec{b}$ : impact parameter.

In order to solve the responses caused by the electron sources, the finite-difference time-domain algorithm (FDTD) with Yee-based meshing is utilized [16]. For modeling the dielectric response of the matter, the frequency dependent dispersion diagram of the (anisotropic) matter along the principle axes is fitted to a series of functions, such as Drude model, Drude model in addition to Lorentzian functions, and Drude model in addition to two critical point functions [17], but not restricted to. The principle axes is taken along the x, y and z coordinate axes of the simulation domain. The permeability of the structure is taken to be piecewise linear in the different regions of the simulation domain. For updating the field values in each time iteration of the FDTD method, a method described in [16] is used. It has been illustrated in Figure 3. In order to terminate the simulation domain two approaches based on the absorbing boundary conditions (preferably second-order absorbing boundary conditions) [18] and perfectly matched layers [16] is possible.

S12) Radiation response

The optical source may be of any spatial and temporal pulse shape such as, but not limited to, Gaussian, secant-hyperbolic, wavelets, and harmonic waves. If other temporal pulse shapes other than the Gaussian function should be used, the probability function given by equation (5) should be changed accordingly. For example for the case of a secant-hyperbolic pulse, the following equation is used:

$$P_n(\omega,\tau) = \int_{-\infty}^{+\infty} dz \left| g^i(z) J_n \left( \frac{q}{\hbar\omega} |F_z(\omega)| \mathrm{sech} \left[ -\frac{(z/V_{el}+\tau)^2}{2W_s^2} \right] \right) \right|^2 \qquad (5)$$

At which sech(.) is the secant-hyperbolic function.

The optical source is included in simulation S12 and any polarizations may be considered, such as linear, circular, radial and azimuthal. The angle of incidence is adjustable. The polarization, temporal delay in comparison with the electron source, peak laser intensity, spatial focus size, carrier frequency, pulse temporal profile, angle of the incidence, and pulse duration are further, adjustable inputs to the package. The optical source may be introduced in simulation S12 as a series of Huygens sources at a plane in the simulation domain, or as a total-field scattered-field if a plane wave source is meant.

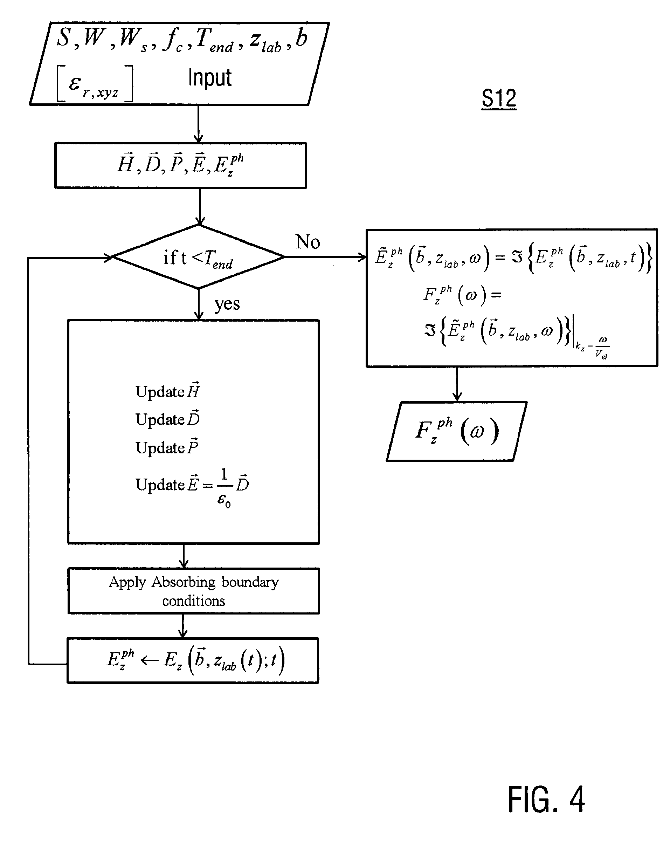

Figure 4 shows the details of simulation S12 in Figure 1. Again, in order to solve the responses caused by the optical sources, the finite-difference time-domain algorithm (FDTD) with Yee-based meshing is utilized [16] as mentioned above. With simulation S12, the Fourier component of the electric field scattered by the sample structure 1 is computed, which caused by the optical source. The symbols used in this flowchart are $S$: polarization of the incident field; $W$ : spatial broadening for the incident Gaussian optical field; $W_s$ : temporal broadening of the pulsed optical field; $f_c$ : carrier frequency; $T_{end}$ : final simulation time; $z_{lab}(t)$ : projected time-dependent position of the electron at the z-axis, at the lab frame; $\vec{H}$ : magnetic field vector $\vec{H} = (H_x, H_y, H_z)$ : displacement vector $\vec{D} = (D_x, D_y, D_z)$ ; $\vec{P}$ : polarization density vector $\vec{P} = (P_x, P_y, P_z)$ ; $\vec{E}$ : electric field vector $\vec{E}^\alpha = (E_x^\alpha, E_y^\alpha, E_z^\alpha)$ , $\alpha \equiv i$ denotes the incident and $\alpha \equiv t$ denotes the total electric field; $E_z^{ph}(z,t)$ : electric field along the trajectory of the electrons at time t caused by the optical source; $\Im\{\square\}$ Fourier transform; $[\varepsilon_{r,xyz}]$ : anisotropic permittivity function as a function of angular frequency; and $\vec{b}$ : impact parameter transform.

S13) Superposition of responses

In order to consider the contributions of both electrons and optical sources to the electron-energy loss spectra, the PINEM field is considered as the superposition of the Fourier-spaced electric field caused by both the electron and optical sources as:

$$F_z^{\mathrm{sup}}(\omega,\tau) = F_z^{el}(\omega) + Ae^{-i\omega\tau} F_z^{ph}(\omega) \qquad (8)$$

where $\tau$ is the temporal delay of the optical pulse with respect to the electron source and A is a positive factor used to scale the amplitude of $F_z^{ph}$ , setting the relative importance of the optical vs. the electronic contribution to the total excitation. Note that only the scattered field contribute to the $F_z^{el}(\omega)$ , as shown in Figure 3.

With the output of the first two simulation steps S11 and S12, the over-all electromagnetic response of the structure in the presence of both electron and optical sources is computed subsequently by using the superposition technique. The structure must not have a nonlinear response, so that the superposition algorithm can be applied. The electromagnetic potential is computed by imposing adjustable global intensity and temporal delays for the optical pulse. The experienced loss and phase-shift spectra of the electrons are computed as a function of the intensity and delay of the optical laser field. The two simulation steps S11 and S12 are used only for simulating the responses of arbitrary electromagnetic structures that their material properties can be described by permittivity and permeability functions. The material properties can be dispersive and anisotropic.

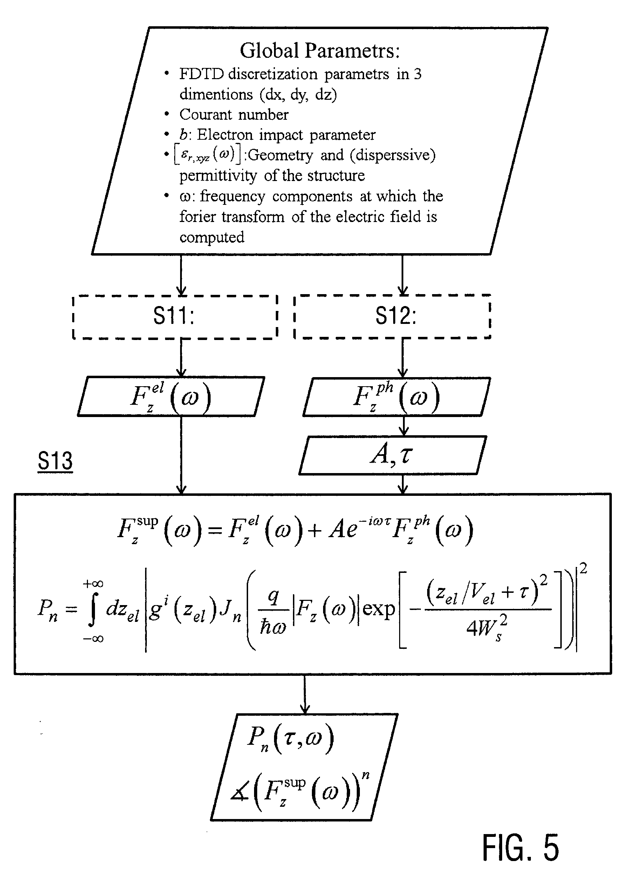

Figure 5 shows the details of the superposition S13 in Figure 1, wherein the following symbols are used: $Z_{el}$ : z-axis at the electron coordinate system; q: electron charges; $\hbar$ : Planck constant; A: amplitude of the electric field for the incident optical beam; r: temporal delay between the electrons and photons; $F^{sup}{}_z$: superposition of the electric fields caused by the optical and electron sources, at the Fourier space; $P_n(\omega,\tau)$ : probability of the electron to lose and gain n-quanta of photon energies; $\angle(\mathbf{F}^{sup}{}_z(\omega,\tau))^n$ : phase of the electron wave-function after interacting with n-photons; $g^i(z_{el})$ : initial wave-function of the electron. Superposition S13 can be also used for computing the evolution of the phase of the electron wavefunction after interaction with n quanta of photon energy, which can be given by

$$n\tan^{-1}\left(\operatorname{Im}\left(F_z^{\mathrm{sup}}\right),\operatorname{Re}\left(F_z^{\mathrm{sup}}\right)\right)\,[1]\,.$$

Advantageously, for different intensities and delays of the electromagnetic excitation field, the two initial simulation steps need not to be redone. Instead it suffices to recompute an interference integral, subject to specific delay and field intensity. This post processing algorithm utilizes the linear response of structures with respect to electromagnetic sources (superposition technique), and inclusion of the delay and the amplitude of the laser field as adjustable factors, to compute EEL/EEG or PINEM spectra as well as phase-shift of the electron wave packets

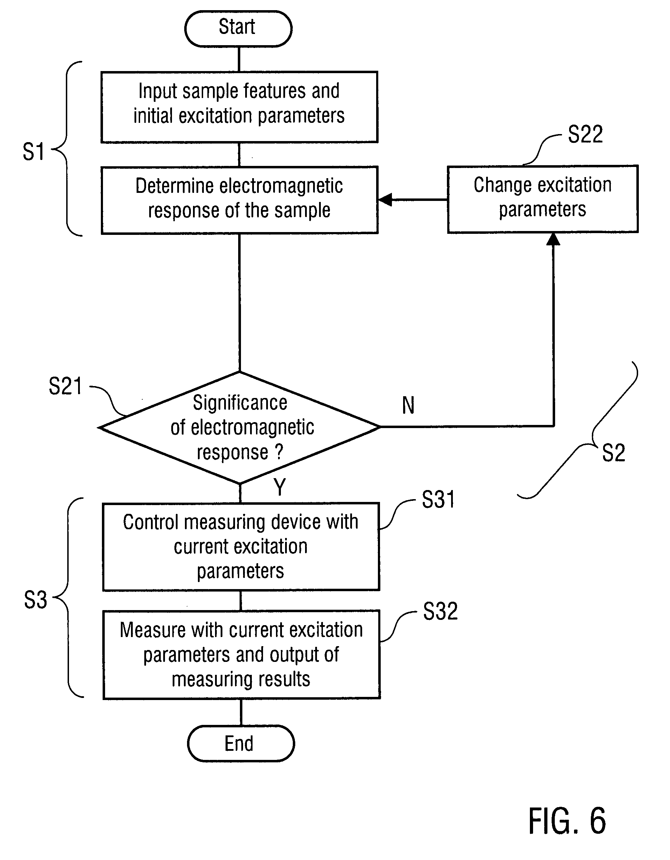

Figure 6 illustrates an embodiment of a method of investigating a dispersive and anisotropic sample structure by combined electron pulse and radiation excitation. Firstly, the electromagnetic response of the sample structure is calculated using the method S1 as shown in Figures 1 and 3 to 5. Subsequently, selected excitation parameters of the electron pulse excitation and the electromagnetic radiation excitation are determined with steps S2. Finally, a real electromagnetic response of the sample structure is measured using the selected excitation parameters (steps S3).

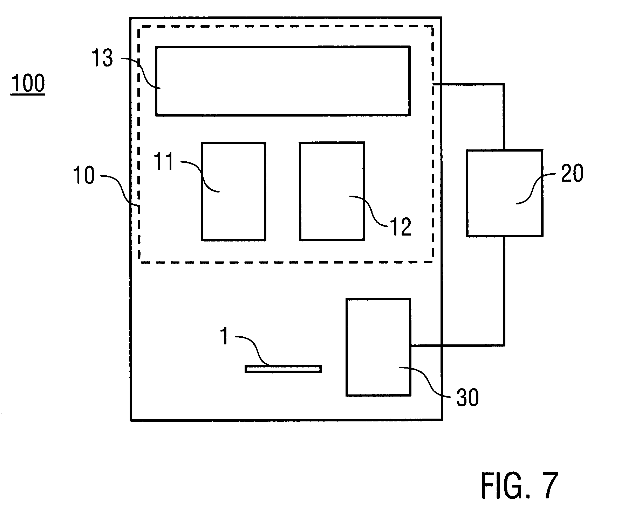

With steps S2 the selected excitation parameters are provided, such that a predetermined significance of the calculated electromagnetic response is obtained. As an example, the predetermined significance is considered to be obtained when the calculated electromagnetic response has a maximum energy resolution. The electromagnetic response calculated with certain initial input parameters is evaluated in step S21, e. g. by comparing the energy resolution of the calculated electromagnetic response with a predetermined reference resolution. If the resolution of the current result is not sufficient, at least one of the electron pulse excitation and the electromagnetic radiation excitation is varied (Step S22) and steps S11 to S13 in Figure 1 are repeated until the reference resolution of the calculated electromagnetic response is obtained. If the resolution is sufficient, the current input parameters of the electron pulse excitation and the electromagnetic radiation excitation are used as the selected parameters for a practical measurement (steps S3). The control device 13 (see Figure 7 below) is adjusted such that the selected parameters are applied to the sample structure 1.

Figure 7 schematically shows a measuring apparatus 100 including an excitation device 10, and adjustment device 20 and a sensor device 30. The excitation device 10 includes an electron pulse excitation unit 11, an electromagnetic radiation excitation unit 12, and a control device 13. The electron pulse excitation unit 11 comprises a pulsed electron source, while the electromagnetic radiation excitation unit 12 comprises e. g. a pulse laser emitting fs optical pulses. The sample structure 1 is arranged in the excitation device 10. The sensor device 30 is adapted for sensing the electric field scattered at the sample. It comprises e. g. an optical sensor. Components 10 and 30 can be implemented with a conventional electron microscope design or with a structure as described in [19]. The adjustment device 20 includes e. g. a computing circuit which is adapted for implementing the method S2 of evaluating the electromagnetic response of the sample structure 1 and selecting optimised input parameters as shown in Figure 6.

The features of the invention disclosed in the above description, the drawings and the claims can be of significance both individually as well as in combination for the realization of the invention in its various embodiments.

**Claims**

1.  Method of determining an electromagnetic response of a sample structure having a predetermined bulk permittivity and permeability, to electron and radiation pulses, comprising the steps of:

    (S11) calculating an electron pulse response of the sample structure to an electron pulse excitation, using a finite-difference time-domain method, wherein the electron pulse excitation is represented by a non-singular current source driven by relativistic moving non-Coulombian electron charges, the electron pulse response is calculated on the basis of an interaction of the electron pulse excitation with electromagnetic modes of the sample structure at the laboratory frame, and the electron pulse response depends on the bulk permittivity and permeability of the sample structure,
    (S12) calculating a radiation response of the sample structure to an electromagnetic radiation excitation, using a finite-difference time-domain method, wherein the radiation response depends on the bulk permittivity and permeability of the sample structure, and

(S13) providing the electromagnetic response of the sample structure by superimposing the electron pulse response of step (S11) and the radiation response of step (S12), wherein the electromagnetic response comprises at least one of electron-energy-loss spectra of the sample structure and an experienced phase of electron wave functions after interacting with photons of the electromagnetic radiation excitation.

2. Method according to claim 1, wherein

   - the electron pulse excitation is represented by a charge cloud, which is treated as a current density function derived from an electron wavefunction.

3. Method according to claim 2, wherein

   - the charge cloud is represented by a Gaussian charge distribution.

4. Method according to one of the foregoing claims, wherein

   - the electromagnetic radiation excitation includes terahertz, microwave, optical, ultraviolet, or X-rays radiation, and/or
   - the electron pulse excitation has a continuous-wave shape or a pulsed shape, and/or
   - the electromagnetic radiation excitation has a continuous-wave shape or a pulsed shape.

5. Method according to one of the foregoing claims, comprising the step of

   (S14) calculating photon induced near-field electron microscopy spectra of the sample structure by superimposing the electron pulse response of step (S11) and the radiation response of step (S12).

6. Method according to one of the foregoing claims, comprising the step of

   (S15) simulating electron-energy-loss spectra or the photon assisted near-field electron microscopy spectra at intensities of the electromagnetic radiation excitation at which both of the electron pulse excitation and the electromagnetic radiation excitation have equal or comparable contributions to the electromagnetic response.

7. Method according to one of the foregoing claims, comprising the step of

   (S2) providing selected excitation parameters of the electron pulse excitation and the electromagnetic radiation excitation in dependency on the calculated electromagnetic response of the sample structure of step (S13), wherein the selected excitation parameters result in a predetermined significance of the calculated electromagnetic response.

8. Method according to claim 7, wherein the predetermined significance of the calculated electromagnetic response is obtained, when the calculated electromagnetic response has at least one of the features

   - the calculated electromagnetic response has a maximum spatial, temporal and/or energy resolution,
   - the calculated electromagnetic response has an interference pattern, and
   - the calculated electromagnetic response enables a decomposition of certain modes of the sample structure.

9. Method according to claim 7 or 8, wherein the step (S2) of providing the selected excitation parameters includes

   (S21) evaluating the calculated electromagnetic response of the sample structure of step (S13), and
   (S22) varying at least one of the electron pulse excitation and the electromagnetic radiation excitation and repeating steps (S11) to (S13), until the predetermined significance of the calculated electromagnetic response is obtained in step (S21).

10. Method of investigating a sample structure having a predetermined bulk permittivity and permeability, comprising the steps of

    (S1) determining a calculated electromagnetic response of the sample structure with a method according to one of the claims 1 to 6,

(S2) providing the selected excitation parameters of the electron pulse excitation and the electromagnetic radiation excitation, such that the predetermined significance of the calculated electromagnetic response is obtained, with a method according to one of the claims 7 to 9, and
(S3) measuring a real electromagnetic response of the sample structure using the selected excitation parameters.

11. Computer -readable medium comprising a computer program with a program code for carrying out the method according to at least one of the claims 1 to 10.

12. Apparatus comprising the computer-readable storage medium according to claim 11.

**Patentansprüche**

1. Verfahren zur Bestimmung einer elektromagnetischen Reaktion einer Probenstruktur, die eine vorbestimmte Volumen-Permittivität und -Permeabilität aufweist, auf Elektronen- und Strahlungs-Pulse, umfassend die Schritte:

(S11) Berechnung einer Elektronenpulsreaktion der Probenstruktur auf eine Elektronenpulsanregung unter Verwendung eines Finite-Differenz-Zeitdomänen-Verfahrens, wobei die Elektronenpulsanregung durch eine nicht-singuläre Stromquelle repräsentiert wird, die durch eine relativistische Bewegung von Nicht-Coulomb-Typ-Elektronenladungen getrieben wird, die Elektronenpulsreaktion auf der Basis einer Wechselwirkung der Elektronenpulsanregung mit elektromagnetischen Moden der Probenstruktur im Laborrahmen berechnet wird und die Elektronenpulsreaktion von der Volumen-Permittivität und -Permeabilität der Probenstruktur abhängt,
(S12) Berechnung einer Strahlungsreaktion der Probenstruktur auf eine elektromagnetische Strahlungsanregung unter Verwendung eines Finite-Differenz-Zeitdomänen-Verfahrens, wobei die Strahlungsreaktion von der Volumen-Permittivität und -Permeabilität der Probenstruktur abhängt, und
(S13) Bereitstellung der elektromagnetischen Reaktion der Probenstruktur durch eine Überlagerung der Elektronenpulsreaktion von Schritt (S11) und der Strahlungsreaktion von Schritt (S12), wobei die elektromagnetische Reaktion mindestens eines von Elektronen-Energieverlustspektren der Probenstruktur und einer erfahrenen Phase von Elektronenwellenfunktionen nach einer Wechselwirkung mit Photonen der elektromagnetischen Strahlungsanregung umfasst.

2. Verfahren gemäß Anspruch 1, wobei

- die Elektronenpulsanregung durch eine Ladungswolke repräsentiert wird, die als eine Stromdichtefunktion behandelt wird, die von einer Elektronenwellenfunktion abgeleitet ist.

3. Verfahren gemäß Anspruch 2, wobei

- die Ladungswolke durch eine Gauß 'sche Ladungsverteilung repräsentiert wird.

4. Verfahren gemäß einem der vorhergehenden Ansprüche, wobei

- die elektromagnetische Strahlungsanregung eine Terahertz-, Mikrowellen-, optische, Ultraviolett-, oder Röntgenstrahlen-Strahlung enthält, und/oder
- die Elektronenpulsanregung eine Form einer kontinuierlichen Welle oder eine Pulsform aufweist, und/oder
- die elektromagnetische Strahlungsanregung eine Form einer kontinuierlichen Welle oder eine Pulsform aufweist.

5. Verfahren gemäß einem der vorhergehenden Ansprüche, umfassend den Schritt

(S14) Berechnung von Photonen-induzierten Nahfeld-Elektronenmikroskopie-Spektren der Probenstruktur durch eine Überlagerung der Elektronenpulsreaktion von Schritt (S11) und der Strahlungsreaktion von Schritt (S12).

6. Verfahren gemäß einem der vorhergehenden Ansprüche, umfassend den Schritt

(S15) Simulation von Elektronen-Energieverlustspektren oder der Photonen-unterstützten Nahfeld-Elektronenmikroskopie-Spektren bei Intensitäten der elektromagnetischen Strahlungsanregung, bei denen beide der Elektronenpulsanregung und der elektromagnetischen Strahlungsanregung gleiche oder vergleichbare Beiträge zu der elektromagnetischen Reaktion aufweisen.

7.  Verfahren gemäß einem der vorhergehenden Ansprüche, umfassend den Schritt

    (S2) Bereitstellung von ausgewählten Anregungsparametern der Elektronenpulsanregung und der elektromagnetischen Strahlungsanregung in Abhängigkeit von der berechneten elektromagnetischen Reaktion der Probenstruktur von Schritt (S13), wobei die ausgewählten Anregungsparameter eine vorbestimmte Signifikanz der berechneten elektromagnetischen Reaktion ergeben.

8.  Verfahren gemäß Anspruch 7, wobei die vorbestimmte Signifikanz der berechneten elektromagnetischen Reaktion erhalten wird, wenn die berechnete elektromagnetische Reaktion mindestens eines der Merkmale aufweist

    - die berechnete elektromagnetische Reaktion hat eine maximale Raum-, Zeit- und/oder Energie-Auflösung,
    - die berechnete elektromagnetische Reaktion weist ein Interferenzmuster auf, und
    - die berechnete elektromagnetische Reaktion ermöglicht eine Zerlegung von bestimmten Moden der Probenstruktur.

9.  Verfahren gemäß Anspruch 7 oder 8, wobei der Schritt (S2) der Bereitstellung der ausgewählten Anregungsparameter enthält:

    (S21) Bewertung der berechneten elektromagnetischen Reaktion der Probenstruktur von Schritt (S13), und
    (S22) Variation von mindestens einer von der Elektronenpulsanregung und der elektromagnetischen Strahlungsanregung und eine Wiederholung der Schritte (S11) bis (S13), bis die vorbestimmte Signifikanz der berechneten elektromagnetischen Reaktion bei Schritt (S21) erhalten wird.

10. Verfahren zur Untersuchung einer Probenstruktur, die eine vorbestimmte Volumen-Permittivität und -Permeabilität aufweist, umfassend die Schritte

    (S1) Bestimmung einer berechneten elektromagnetischen Reaktion der Probenstruktur mit einem Verfahren gemäß einem der Ansprüche 1 bis 6,
    (S2) Bereitstellung der ausgewählten Anregungsparameter der Elektronenpulsanregung und der elektromagnetischen Strahlungsanregung, so dass die vorbestimmte Signifikanz der berechneten elektromagnetischen Reaktion erhalten wird, mit einem Verfahren gemäß einem der Ansprüche 7 bis 9, und
    (S3) Messung einer realen elektromagnetischen Reaktion der Probenstruktur unter Verwendung der ausgewählten Anregunsparameter.

11. Computer-lesbares Medium, umfassend ein Computerprogramm mit einem Programmcode zur Ausführung des Verfahrens gemäß mindestens einem der Ansprüchen 1 bis 10.

12. Vorrichtung, umfassend ein Computer-lesbares Speichermedium gemäß Anspruch 11.

**Revendications**

1.  Procédé de détermination d'une réponse électromagnétique d'une structure d'échantillon ayant une permittivité et une perméabilité de masse prédéterminées à des impulsions d'électrons et de rayonnement, comprenant les étapes de :

    (S11) calcul d'une réponse aux impulsions d'électrons de la structure d'échantillon à une excitation par impulsions d'électrons, en utilisant une méthode des différences finies dans le domaine temporel, dans lequel l'excitation par impulsions d'électrons est représentée par une source de courant non singulière commandée par des charges d'électrons non coulombiennes mobiles relativistes, la réponse aux impulsions d'électrons est calculée sur la base d'une interaction de l'excitation par impulsions d'électrons avec des modes électromagnétiques de la structure d'échantillon au niveau du châssis de laboratoire, et la réponse aux impulsions d'électrons dépend de la permittivité et la perméabilité de masse de masse de la structure d'échantillon,
    (S12) calcul d'une réponse au rayonnement de la structure d'échantillon à une excitation par rayonnement électromagnétique, en utilisant une méthode des différences finies dans le domaine temporel, dans lequel la réponse au rayonnement dépend de la permittivité et la perméabilité de masse de masse de la structure d'échantillon, et

(S13) fourniture de la réponse électromagnétique de la structure d'échantillon en superposant la réponse aux impulsions d'électrons de l'étape (S11) et la réponse au rayonnement de l'étape (S12), dans lequel la réponse électromagnétique comprend au moins un parmi des spectres de perte d'énergie d'électrons de la structure d'échantillon et une phase constatée de fonctions d'onde électronique après interaction avec des photons de l'excitation par rayonnement électromagnétique.

2. Procédé selon la revendication 1, dans lequel

- l'excitation par impulsions d'électrons est représentée par un nuage de charges, qui est traité comme une fonction de densité de courant dérivée d'une fonction d'onde électronique.

3. Procédé selon la revendication 2, dans lequel

- le nuage de charges est représenté par une distribution de charges gaussienne.

4. Procédé selon une des revendications précédentes, dans lequel

- l'excitation par rayonnement électromagnétique comprend un rayonnement térahertz, hyperfréquence, optique, ultraviolet ou à rayons X, et/ou
- l'excitation par impulsions d'électrons a une forme d'onde continue ou une forme à impulsions, et/ou
- l'excitation par rayonnement électromagnétique a une forme d'onde continue ou une forme à impulsions.

5. Procédé selon une des revendications précédentes, comprenant l'étape de

(S14) calcul de spectres de microscopie électronique en champ proche induite par photons de la structure d'échantillon en superposant la réponse aux impulsions d'électrons de l'étape (S11) et la réponse au rayonnement de l'étape (S12).

6. Procédé selon une des revendications précédentes, comprenant l'étape de

(S15) simulation de spectres de perte d'énergie d'électrons ou des spectres de microscopie électronique en champ proche assistée par photons à des intensités de l'excitation par rayonnement électromagnétique auxquelles à la fois l'excitation par impulsions d'électrons et l'excitation par rayonnement électromagnétique ont des contributions égales ou comparables à la réponse électromagnétique.

7. Procédé selon une des revendications précédentes, comprenant l'étape de

(S2) fourniture de paramètres d'excitation sélectionnés de l'excitation par impulsions d'électrons et l'excitation par rayonnement électromagnétique en fonction de la réponse électromagnétique calculée de la structure d'échantillon de l'étape (S13), dans lequel les paramètres d'excitation sélectionnés entraînent une signification prédéterminée de la réponse électromagnétique calculée.

8. Procédé selon la revendication 7, dans lequel la signification prédéterminée de la réponse électromagnétique calculée est obtenue, quand la réponse électromagnétique calculée a au moins une des caractéristiques suivantes :

- la réponse électromagnétique calculée a une résolution spatiale, temporelle et/ou en énergie maximale,
- la réponse électromagnétique calculée a un diagramme d'interférences, et
- la réponse électromagnétique calculée permet une décomposition de certains modes de la structure d'échantillon.

9. Procédé selon la revendication 7 ou 8, dans lequel l'étape (S2) de fourniture des paramètres d'excitation sélectionnés comprend (S21) l'évaluation de la réponse électromagnétique calculée de la structure d'échantillon de l'étape (S13), et

(S22) la variation d'au moins une parmi l'excitation par impulsions d'électrons et l'excitation par rayonnement électromagnétique et la répétition des étapes (S11) à (S13), jusqu'à ce que la signification prédéterminée de la réponse électromagnétique calculée soit obtenue dans l'étape (S21).

10. Procédé d'examen d'une structure d'échantillon ayant une permittivité et une perméabilité de masse prédéterminées, comprenant les étapes de

(S1) détermination d'une réponse électromagnétique calculée de la structure d'échantillon avec un procédé selon une des revendications 1 à 6,
(S2) fourniture de paramètres d'excitation sélectionnés de l'excitation par impulsions d'électrons et l'excitation par rayonnement électromagnétique, de manière que la signification prédéterminée de la réponse électromagnétique calculée soit obtenue, avec un procédé selon une des revendications 7 à 9, et
(S3) mesure d'une réponse électromagnétique réelle de la structure d'échantillon en utilisant les paramètres d'excitation sélectionnés.

11. Support lisible par ordinateur comprenant un programme informatique avec un code de programme pour exécuter le procédé selon au moins une des revendications 1 à 10.

12. Dispositif comprenant le support de stockage lisible par ordinateur selon la revendication 11.

FIG. 1

FIG. 2

FIG. 3

$$S, W, W_s, f_c, T_{end}, z_{lab}, b$$

$$\left[\varepsilon_{r,xyz}\right] \quad \text{Input}$$

$$\underline{S12}$$

$$\vec{H}, \vec{D}, \vec{P}, \vec{E}, E_z^{ph}$$

if $t < T_{end}$ — No

$$\tilde{E}_z^{ph}\left(\vec{b}, z_{lab}, \omega\right) = \Im\left\{E_z^{ph}\left(\vec{b}, z_{lab}, t\right)\right\}$$

$$F_z^{ph}\left(\omega\right) =$$

$$\Im\left\{\tilde{E}_z^{ph}\left(\vec{b}, z_{lab}, \omega\right)\right\}\Big|_{k_z = \frac{\omega}{V_{el}}}$$

yes

Update $\vec{H}$

Update $\vec{D}$

Update $\vec{P}$

Update $\vec{E} = \dfrac{1}{\varepsilon_0}\vec{D}$

$$F_z^{ph}\left(\omega\right)$$

Apply Absorbing boundary conditions

$$E_z^{ph} \leftarrow E_z\left(\vec{b}, z_{lab}(t); t\right)$$

FIG. 4

## Global Parametrs:

- FDTD discretization parametrs in 3 dimentions (dx, dy, dz)
- Courant number
- $b$: Electron impact parameter
- $\left[ \varepsilon_{r,xyz}(\omega) \right]$:Geometry and (disperssive) permittivity of the structure
- $\omega$: frequency components at which the forier transform of the electric field is computed

S11:

S12:

$$F_z^{el}(\omega)$$

$$F_z^{ph}(\omega)$$

$$A, \tau$$

S13

$$F_z^{\text{sup}}(\omega) = F_z^{el}(\omega) + Ae^{-i\omega\tau}F_z^{ph}(\omega)$$

$$P_n = \int_{-\infty}^{+\infty} dz_{el} \left| g^i(z_{el}) J_n \left( \frac{q}{\hbar\omega} |F_z(\omega)| \exp\left[ -\frac{(z_{el}/V_{el} + \tau)^2}{4W_s^2} \right] \right) \right|^2$$

$$P_n(\tau, \omega)$$

$$\angle \left( F_z^{\text{sup}}(\omega) \right)^n$$

FIG. 5

Start

Input sample features and
initial excitation parameters

S1

Determine electromagnetic
response of the sample

S22

Change excitation
parameters

S21

Significance
of electromagnetic
response ?

N

Y

S2

Control measuring device with
current excitation
parameters

S31

S3

Measure with current excitation
parameters and output of
measuring results

S32

End

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20110220792 A1

### Non-patent literature cited in the description

- **PARK, S.T. ; M.M. LIN ; A.H. ZEWAIL.** Photon-induced near-field electron microscopy (PINEM): theoretical and experimental. *New Journal of Physics,* 2010, 12
- **ZEWAIL, A.H. ; V. LOBASTOV.** Method and system for ultrafast photoelectron microscope. 2005
- **DE ABAJO, F.J.G. ; A. HOWIE.** Retarded field calculation of electron energy loss in inhomogeneous dielectrics. *Physical Review B,* 2002, vol. 65 (11
- **KOH, A.L. et al.** Electron Energy-Loss Spectroscopy (EELS) of Surface Plasmons in Single Silver Nanoparticles and Dimers: Influence of Beam Damage and Mapping of Dark Modes. *Acs Nano,* 2009, vol. 3 (10), 3015-3022
- **GEUQUET, N. ; L. HENRARD.** EELS and optical response of a noble metal nanoparticle in the frame of a discrete dipole approximation. *Ultramicroscopy,* 2010, vol. 110 (8), 1075-1080
- **MATYSSEK, C. et al.** Computing electron energy loss spectra with the Discontinuous Galerkin Time-Domain method. *Photonics and Nanostructures-Fundamentals and Applications,* 2011, vol. 9 (4), 367-373
- **HOWIE, A.** Photon interactions for electron microscopy applications. *European Physical Journal-Applied Physics,* 2011, vol. 54 (3
- **EGERTON, R.F.** Limits to the spatial, energy and momentum resolution of electron energy-loss spectroscopy. *Ultramicroscopy,* 2007, vol. 107 (8), 575-586
- **DE ABAJO, F.J.G.** Optical excitations in electron microscopy. *Reviews of Modern Physics,* 2010, vol. 82 (1), 209-275
- **VERBONCOEUR, J.P.** Particle simulation of plasmas: review and advances. *Plasma Physics and Controlled Fusion,* 2005, vol. 47, A231-A260
- **BARWICK, B. ; D.J. FLANNIGAN ; A.H. ZEWAIL.** Photon-induced near-field electron microscopy. *Nature,* 2009, vol. 462 (7275), 902-906
- **DE ABAJO, F.J.G. ; M. KOCIAK.** Electron energy-gain spectroscopy. *New Journal of Physics,* 2008, 10
- **AIZPURUA, J. ; A. RIVACOBA ; S.P. APELL.** Electron-energy losses in hemispherical targets. *Physical Review B,* 1996, vol. 54 (4), 2901-2909
- **DE ABAJO, F.J.G. ; J. AIZPURUA.** Numerical simulation of electron energy loss near inhomogeneous dielectrics. *Physical Review B,* 1997, vol. 56 (24), 15873-15884
- **PARK, S.T. ; O.-H. KWON ; A.H. ZEWAIL.** Chirped imaging pulses in four-dimensional electron microscopy: femtosecond pulsed hole burning. *New Journal of Physics,* 2012, 14
- **TAFLOVE, A.** Computational Electrodynamics: The Finite-Difference Time-Domain Method. MA: Artech House, 1995
- **ETCHEGOIN, P.G. ; E.C. LE RU ; M. MEYER.** An analytic model for the optical properties of gold. *Journal of Chemical Physics,* 2006, vol. 125 (16
- **SCHNEIDER, J., B.** *Understanding the Finite-Difference Time-Domain Method,* 2010, www.eecs.wsu.edu/~schneidj/ufdtd